# EUROPÄISCHE PATENTSCHRIFT

(11) **EP 1 132 608 B1**
(45) Veröffentlichungstag und Bekanntmachung des Hinweises auf die Patenterteilung: **01.12.2004**
(21) Anmeldenummer: 01104862.6
(22) Anmeldetag: 28.02.2001
(51) Int. Cl.: F02D 41/40, F02D 41/38, F02D 35/02, F02D 41/30, G01M 15/00

(54) **Kalibrierungsverfahren in einem Verbrennungsmotor**
Calibration method in an internal combustion engine
Procédé d'étalonnage dans un moteur à combustion interne

(30) Priorität: 10.03.2000 DE 10011632
(43) Veröffentlichungstag der Anmeldung: 12.09.2001
(73) Patentinhaber: Delphi Technologies, Inc., Troy, MI 48007 (US)
(72) Erfinder: Glavmo, Magnus P., 8272 Mamer (LU); DuFaux, Henri M.A.F., 6723 Habay-La-Vieille (BE); Wesquet, Alain, 8545 Niederpallen (LU); Engel, Joseph A., 4671 Oberkorn (LU)
(74) Vertreter: Manitz, Finsterwald & Partner GbR

(56) Entgegenhaltungen:
- EP-A- 0 055 120
- DE-A- 19 749 817
- US-A- 4 658 642
- US-A- 4 739 649

## Beschreibung

Die Erfindung betrifft ein Kalibrierungsverfahren für eine Einrichtung zum Bestimmen der Kolbenstellung in einem Verbrennungsmotor, insbesondere in einem Dieselmotor.

Als Meßgröße zur Festlegung des Einspritzzeitpunktes wird üblicherweise die Stellung des Kolbens im Zylinder des Verbrennungsmotors verwendet. Hierzu wird die Drehstellung der Kurbelwelle des Verbrennungsmotors bestimmt, an der die Kolben in definierter Position bezüglich der Drehstellung der Kurbelwelle durch Pleuelstangen angelenkt sind. Um die Drehstellung der Kurbelwelle zu erfassen, ist nahe der Kurbelwelle eine Einrichtung angeordnet, mit der die Drehstellung der Kurbelwelle und damit indirekt die Stellung der verschiedenen Kolben in den Zylindern des Verbrennungsmotors erfaßt werden kann. Die Einrichtung weist zu diesem Zweck üblicherweise ein an der Kurbelwelle befestigtes, ferromagnetisches Geberrad auf, daß insgesamt 60 Zähne besitzt, wobei zwei Zähne fehlen. Mit Hilfe eines induktiven Drehzahlsensors, der gleichfalls Bestandteil der Einrichtung ist, wird die Zahnfolge des Geberrades abgetastet. Sobald die am Geberrad ausgebildete Lücke zwischen den Zähnen am Drehzahlsensor vorbeigeführt wird, ändert sich dessen Signal, wodurch die Drehstellung der Kurbelwelle und damit indirekt die Kolbenstellung des jeweiligen Kolbens ermittelt werden kann.

Aufgrund der zwischen dem Geberrad und dem induktiven Drehzahlsensor bestehenden Einbautoleranzen kann es zu einer Abweichung der von der Einrichtung bestimmten Kurbelwellenstellung von der tatsächlichen Kurbelwellenstellung kommen, die mehrere Kurbelwellenwinkelgrade betragen kann. Die von der Einrichtung auf Grundlage der bestimmten Kurbelwellenstellung bestimmte Kolbenstellung weicht in einem solchen Fall von der tatsächlichen aktuellen Stellung des Kolbens im Zylinder ab, so daß als Folge der tatsächliche Einspritzzeitpunkt des Kraftstoffes von dem von der Motorsteuerung gewünschten Einspritzzeitpunkt so abweicht, daß der Betrieb des Verbrennungsmotors nachhaltig gestört sein kann. So können bei einem Dieselmotor schon Abweichungen von zwei Kurbelwellenwinkelgraden beim Einspritzzeitpunkt zu einer Leistungsreduzierung bei gleichzeitig erhöhtem Schadstoffausstoß führen.

Um derartige Fehlfunktionen aufgrund von Toleranzen zwischen dem Geberrad und dem Drehzahlsensor zu vermeiden, ist es derzeit üblich, das Geberrad und den Drehzahlsensor der Einrichtung zum Bestimmen der Kolbenstellung werksseitig zu kalibrieren, wobei die Kalibrierung der Einrichtung für die gesamte Lebensdauer des Motors ausgelegt ist.

Es ist Aufgabe der Erfindung, ein Kalibrierungsverfahren für eine Einrichtung zum Bestimmen der Kolbenstellung anzugeben, bei dem jederzeit auf einfache Weise eine Kalibrierung der Einrichtung durchgeführt werden kann.

Die Erfindung löst die Aufgabe durch ein Kalibrierungsverfahren mit den Merkmalen nach Anspruch 1 und insbesondere dadurch, daß bei dem Verfahren bezogen auf eine von der Einrichtung bestimmte, vorgegebene Kolbenstellung zu verschiedenen Einspritzzeitpunkten jeweils die gleiche Kraftstoffmenge in den Zylinder des Verbrennungsmotors eingespritzt und zur Verbrennung gebracht wird, die für jeden Einspritzzeitpunkt im Zylinder des Verbrennungsmotors entstehende Temperatur erfaßt wird, die für die verschiedenen Einspritzzeitpunkte erfaßten Temperaturen miteinander verglichen werden, um den auf die vorgegebene Kolbenstellung bezogenen Einspritzzeitpunkt zu ermitteln, bei dem zumindest annähernd die höchste Temperaturentwicklung während des jeweiligen Verbrennungsvorgangs aufgetreten ist, der auf die vorgegebene Kolbenstellung bezogene Einspritzzeitpunkt, bei dem die höchste Temperaturentwicklung während des Verbrennungsvorgangs aufgetreten ist, mit einem abgespeicherten, für den Motortyp bekannten spezifischen Einspritzzeitpunkt verglichen wird, der bei einer für diesen spezifischen Einspritzzeitpunkt bekannten Kolbenstellung zu einer für diese Kraftstoffmenge zumindest annähernd höchsten Temperaturentwicklung im Verbrennungsvorgang führt, und die Einrichtung zum Bestimmen der Kolbenstellung kalibriert wird, indem die vorgegebene Kolbenstellung entsprechend der Abweichung zwischen den beiden Einspritzzeitpunkten an die tatsächliche Kolbenstellung angeglichen wird.

Bei der Erfindung wird zunächst eine Kolbenstellung als Referenz vorgegeben, die von der Einrichtung bestimmt worden ist. Auf Grundlage dieser vorgegebenen Kolbenstellung wird zu verschiedenen Einspritzzeitpunkten jeweils die gleiche Menge Kraftstoff in den Zylinder des Verbrennungsmotors eingespritzt und zur Verbrennung gebracht. Auf diese Weise wird erreicht, daß zu zumindest annähernd vergleichbaren Betriebsbedingungen des Verbrennungsmotors eine Verbrennung dieser zu unterschiedlichen Einspritzzeitpunkten zugeführten Kraftstoffmengen erfolgt. Für jeden Einspritzzeitpunkt wird die durch die Verbrennung der jeweiligen Kraftstoffmenge freigesetzte Temperatur erfaßt. Die für die verschiedenen Einspritzzeitpunkte erfaßten Temperaturen werden anschließend miteinander verglichen, um den auf die vorgegebene Kolbenstellung bezogenen Einspritzzeitpunkt zu ermitteln, bei dem zumindest annähernd die höchste Temperaturentwicklung während der überwachten Verbrennungsvorgänge aufgetreten ist.

Üblicherweise wird jeder Motortyp, bevor er in Serie gefertigt wird, eingehend getestet. Dabei werden unter anderem die für diesen Motortyp spezifischen Einspritzzeitpunkte ausgehend von einer Referenzkolbenstellung, beispielsweise dem oberen Totpunkt des Kolbens, bestimmt, bei denen während der Verbrennung im Inneren des Zylinders die jeweils höchsten Temperaturen für eine vorgegebene Menge Kraftstoff auftreten. Diese für den jeweiligen Motortyp spezifischen Einspritzzeitpunkte definieren jeweils einen zeitlichen Abstand, zu dem ausgehend von der bekannten Kolbenstellung die Einspritzung des Kraftstoffs erfolgt. Da der zeitliche Abstand des Einspritzzeitpunktes bezogen auf die jeweilige Kolbenstellung, bei der die höchste Temperaturentwicklung während des Verbrennungsvorgangs für diese vorgegebene Menge Kraftstoff auftritt, bei gleichen Randbedingungen gleich ist, kann durch Vergleich des Einspritzzeitpunktes, der bezogen auf die von der Einrichtung vorgegebene Kolbenstellung bestimmt wurde, mit dem spezifischen Einspritzzeitpunkt, der bezogen auf eine bekannte Kolbenstellung definiert ist, ermittelt werden, inwieweit die von der Einrichtung bestimmte Kolbenstellung von der tatsächlichen Kolbenstellung im Verbrennungsmotor abweicht. Indem die vorgegebene Kolbenstellung entsprechend der Abweichung zwischen den beiden Einspritzzeitpunkten an die tatsächliche Kolbenstellung angeglichen wird, kann die Einrichtung zum Bestimmen der Kolbenstellung auf einfache Weise jederzeit kalibriert werden.

Weitere vorteilhafte Weiterbildungen der Erfindung ergeben sich aus der nachfolgenden Beschreibung, der Zeichnung sowie den Unteransprüchen.

So wird bei einer bevorzugten Ausführungsform des Verfahrens vorgeschlagen, den Vergleich zwischen den beiden Einspritzzeitpunkten vorzunehmen, indem die Differenz des zeitlichen Abstandes des Einspritzzeitpunktes zu der vorgegebenen Kolbenstellung und dem zeitlichen Abstand des spezifischen Einspritzzeitpunktes zu der bekannten Kolbenstellung gebildet wird. Auf diese Weise ist ein sehr schnelles Kalibrieren der Einrichtung möglich.

Als Ausgangszeitpunkt für die Einspritzzeitpunkte wird vorzugsweise eine Kolbenstellung gewählt, bei der der Kolben eine eindeutig definierte Position im Zylinder einnimmt. Hierzu eignet sich insbesondere der obere Totpunkt eines der Kolben des Verbrennungsmotors, von dem ausgehend die Einspritzzeitpunkte bestimmt werden.

Wie sich in einer Vielzahl von Versuchsreihen gezeigt hat, liegt der Zündzeitpunkt des für die meisten Motortypen spezifischen Einspritzzeitpunktes, bei dem ausgehend vom oberen Totpunkt des Kolbens die höchste Temperaturentwicklung bei einer vorgegebenen Menge Kraftstoff erreicht wird, in einem Bereich von etwa 5 bis 6 Kurbelwellenwinkelgraden vor dem oberen Totpunkt des Kolbens. Auf diese Weise ist eine eindeutige Definition des spezifischen Einspritzzeitpunktes möglich, durch den mit Hilfe des erfindungsgemäßen Verfahrens auf die tatsächliche Kolbenstellung ausgehend von der von der Einrichtung bestimmten Kolbenstellung rückgeschlossen werden kann.

Als Meßeinrichtung für die Temperatur während der Verbrennungsvorgänge wird vorzugsweise eine die Leitfähigkeit des im Zylinder befindlichen Verbrennungsgases erfassende Meßeinrichtung verwendet, die für jede Einspritzung, die zum Kalibrieren vorgenommen wird, eine Folge von Leitfähigkeitswerten bestimmt. Die Meßeinrichtung verwendet beispielsweise die Zündkerze des Ottomotors oder die Glühkerze des Dieselmotors als Sensor. Hierzu wird die Zündkerze bzw. die Glühkerze mit einem Referenzwiderstand in Reihe geschaltet, an dem die zu messende Spannung abgegriffen wird. Durch Anlegen einer negativen elektrischen Spannung an die Elektroden der Zündkerze bzw. an die Glühkerze kann während des Verbrennungsvorgangs die Leitfähigkeit des Verbrennungsgases zwischen den Elektroden der Zündkerze bzw. zwischen der Glühkerze und der Innenwand des Zylinders erfaßt werden. Durch die während der Verbrennung entstehenden positiv geladenen Teilchen kommt es zu einer Änderung der Leitfähigkeit des Verbrennungsgases, die ihrerseits zu einer Änderung des Meßsignals führt. In gleicher Weise kann durch Anlegen einer positiven elektrischen Spannung an die Zündkerze bzw. an die Glühkerze der Anteil an negativ geladenen Teilchen im Verbrennungsgas während des überwachten Verbrennungsvorgangs erfaßt werden, der gleichfalls zu einer Änderung des Meßsignals führt. Da sich der Anteil der geladenen Teilchen im Verbrennungsgas im Abhängigkeit von der im Zylinder herrschenden Temperatur ändert, kann indirekt aus den Leitfähigkeitswerten auf den Ablauf des Verbrennungsvorgangs und die dabei entstehenden Temperaturen rückgeschlossen werden.

So wird bei Verwendung der zuvor beschriebenen Meßeinrichtung vorgeschlagen, die verschiedenen Folgen an Leitfähigkeitswerten bezogen auf den Kurbelwellenwinkel aufzutragen. Auf diese Weise kann der Verlauf des Verbrennungsvorgangs bezogen auf die jeweilige Kurbelwellenposition und damit bezogen auf die Kolbenstellung bestimmt werden. Anschließend wird aus den verschiedenen Leitfähigkeitskurven die Kurve ermittelt, die die größte Amplitude und/oder den durch Integration bestimmten größten Flächeninhalt aufweist, da diese Kurve den Verbrennungsvorgang widerspiegelt, bei dem die höchste Temperatur im Zylinder freigesetzt wird.

Das zuvor beschriebene Kalibrierungsverfahren sollte vorzugsweise nur vorgenommen werden, wenn sich der Verbrennungsmotor nicht im Lastbetrieb befindet, damit beispielsweise durch am Antriebsstrang angreifende Kräfte die Auswertung nicht verfälscht wird.

Nachfolgend wird die Erfindung anhand eines Ausführungsbeispiels unter Bezugnahme auf die Zeichnungen näher erläutert. Darin zeigen:
- Fig. 1: ein Diagramm, in dem bezogen auf einen tatsächlichen oberen Totpunkt verschiedene Meßsignalkurven bei unterschiedlichen Einspritzzeitpunkten gezeigt sind,
- Fig. 2: ein Diagramm, in dem bezogen auf einen angenommenen oberen Totpunkt verschiedene Meßsignalkurven gezeigt sind, und
- Fig. 3: ein Diagramm, in dem bezogen auf den tatsächlichen und den angenommenen oberen Totpunkt des Kolbens die Meßsignalkurve mit höchster Temperaturentwicklung gezeigt ist.

Bei dem nachfolgend beschriebenen Ausführungsbeispiel wird das erfindungsgemäße Verfahren bei einem Dieselmotor eingesetzt. Damit der Einspritzzeitpunkt ermittelt werden kann, bei dem die höchste Temperaturentwicklung auftritt, wird die Leitfähigkeit des Verbrennungsgases im Zylinder gemessen. So hat sich gezeigt, daß sich die Leitfähigkeit des Verbrennungsgases in Abhängigkeit von der Temperaturhöhe derart ändert, daß sich bei niedrigen Temperaturen eine vergleichsweise geringe Leitfähigkeit im Verbrennungsgas zeigt, die mit zunehmender Temperatur ansteigt. Dies läßt sich insbesondere dadurch erklären, daß während des Verbrennungsvorgangs mit zunehmender Temperatur der Anteil an negativ geladenen Teilchen und der Anteil an positiv geladenen Teilchen im Verbrennungsgas zunimmt.

Zum Messen der Leitfähigkeit des im Zylinder befindlichen Verbrennungsgases wird eine Glühkerze des jeweiligen Zylinders des Dieselmotors verwendet. Die Glühkerze des jeweiligen Zylinders ist mit einem Referenzwiderstand in Reihe geschaltet und mit der Innenwand des Zylinders leitend verbunden. Zur Bestimmung der Leitfähigkeit des Verbrennungsgases im jeweiligen Zylinder auf Grundlage der im Verbrennungsgas enthaltenen positiv geladenen Teilchen wird an die Glühkerze während eines Teils des Verdichtungshubes und eines Teils des Arbeitshubes eine negative Spannung angelegt. Durch die während des Verbrennungsprozesses entstehenden positiv geladenen Teilchen ändert sich die Leitfähigkeit des Verbrennungsgases zwischen der Glühkerze und der Innenwand des Zylinders, wodurch sich die am Referenzwiderstand abfallende Spannung ändert, die gemessen und zur Auswertung verstärkt wird. Die verschiedenen Spannungswerte werden als Folge von Leitfähigkeitswerten in einem Speicher abgespeichert. Alternativ ist es auch möglich an die Glühkerze eine positive elektrische Spannung anzulegen, so daß die Meßeinrichtung den Anteil an negativ geladenen Teilchen im Verbrennungsgas erfaßt.

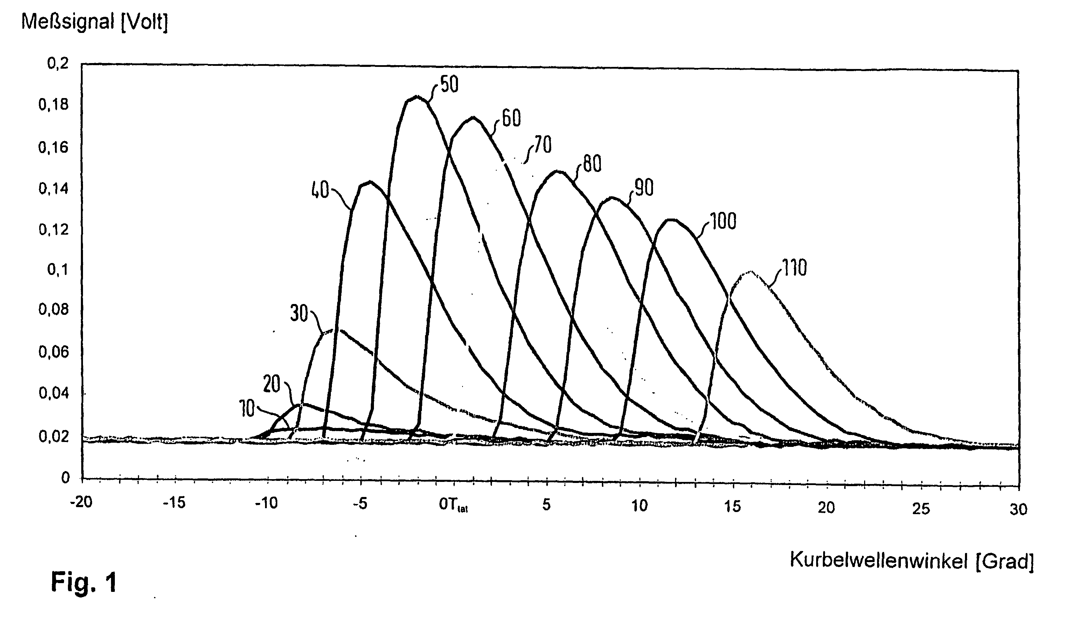

In dem in Fig. 1 gezeigten Diagramm ist der Verlauf verschiedener Meßsignale bezogen auf den Kurbelwellenwinkel gezeigt, die mit der zuvor beschriebenen Meßeinrichtung ermittelt worden sind. Bei diesem Diagramm wurde ausgehend von dem tatsächlichen oberen Totpunkt OTₜₐₜ des Kolbens zu unterschiedlichen Einspritzzeitpunkten jeweils die gleiche Menge Dieselkraftstoff (2,5 mm³) bei zumindest annähernd gleichen Betriebsbedingungen des Dieselmotors (1500 Umdrehungen pro Minute) eingespritzt. In der nachfolgenden Tabelle sind die verschiedenen Einspritzzeitpunkte und Zündzeitpunkte bezogen auf die verschiedenen Meßsignalkurven aufgelistet.

| Kurve | Einspritzzeitpunkt [Grad bezogen auf OT] | Zündzeitpunkt [Grad bezogen auf OT] |
|---|---|---|
| 10 | - 26,9° | - 11° |
| 20 | - 23,9° | - 10,5° |
| 30 | - 20,9° | - 9,2° |
| 40 | - 17,9° | - 7° |
| 50 | - 14,9° | - 5,1° |
| 60 | - 11,9° | - 2,7° |
| 70 | - 8,9° | - 1° |
| 80 | - 5,9° | + 1,7° |
| 90 | - 2,9° | + 4,9° |
| 100 | + 0,1° | + 8,2° |
| 110 | + 3,1° | + 12,5° |

Wie dem Verlauf der Meßsignalkurven 10 bis 110 in dem in Fig. 1 gezeigten Diagramm zu entnehmen ist, führten die unterschiedlichen Einspritzzeitpunkte zu unterschiedlichen Zündzeitpunkten des Dieselkraftstoffes, wobei die Meßsignalkurve 10 eine entsprechend frühe Zündung des Kraftstoffes zeigt, während die Meßsignalkurve 110 einen sehr späten Beginn des Verbrennungsvorgangs angibt. Wie dem Diagramm aus Fig. 1 ferner zu entnehmen ist, zeigt die Meßsignalkurve 50, bei der der Kraftstoff bei einem Kurbelwellenwinkel von etwa -14,9° vor dem tatsächlichen oberen Totpunkt OTₜₐₜ des Kolbens eingespritzt worden ist und sich bei einem Kurbelwellenwinkel von etwa -5,1° vor dem tatsächlichen oberen Totpunkt OTₜₐₜ des Kolbens entzündet hat, die höchste Amplitude.

Wie eine Vielzahl von Versuchsreihen gezeigt hat, weist der Einspritzvorgang, bei dem der Verbrennungsvorgang in einem Kurbelwellenwinkelbereich von -6° bis -5° vor dem tatsächlichen oberen Totpunkt OTₜₐₜ des Kolbens beginnt, die höchste Temperaturentwicklung auf.

Zur Bestimmung des Kurbelwellenwinkels ist üblicherweise an der Kurbelwelle ein Geberrad vorgesehen, daß mit insgesamt 60 Zähnen ausgestattet ist, wobei zwei der Zähne fehlen. Nahe dem an der Kurbelwelle vorgesehenen Geberrad ist ein induktiver Drehzahlsensor vorgesehen, der die Zahnfolge der am Geberrad ausgebildeten 58 Zähne erfaßt. Sobald eine der beiden Zahnlücken des Geberrades am Drehzahlsensor vorbeigeführt wird, ändert sich das vom Drehzahlgeber erzeugte Signal, wodurch die Position der Kurbelwelle und damit die Stellung des Kolbens im Zylinder bestimmt werden kann. Aufgrund von Toleranzen in der Einbaulage des Drehzahlsensors zum Geberrad kann es zu Meßfehlem kommen, die gegebenenfalls aufgrund der Teilung des Geberrades bei mehreren Kurbelwellenwinkelgraden liegen können. Da das vom Drehzahlsensor abgegebene Signal als Meßgröße zur Feststellung der Kolbenstellung und damit als Meßgröße zur Festlegung des Einspritzzeitpunktes verwendet wird, besteht nun die Gefahr, daß der Einspritzzeitpunkt und damit der Zündzeitpunkt beim Dieselmotor nicht zu dem beispielsweise durch die Meßsignalkurve 50 gezeigten optimalen Zeitpunkt erfolgt, sondern zu einem früheren oder späteren Zeitpunkt, wodurch die Leistung des Motors abnimmt.

Um dies zu vermeiden, wird die Einrichtung, mit der der Kurbelwellenwinkel erfaßt wird, während des Betriebes des Verbrennungsmotors kalibriert. Hierzu wird zunächst zu unterschiedlichen Einspritzzeitpunkten eine vorgegebene Menge an Dieselkraftstoff in den Zylinder eingespritzt. Die jeweils eingespritzte Menge Dieselkraftstoff entzündet sich während des Verdichtungsvorganges und verbrennt im Zylinder des Verbrennungsmotors, wodurch der Kolben bewegt wird.

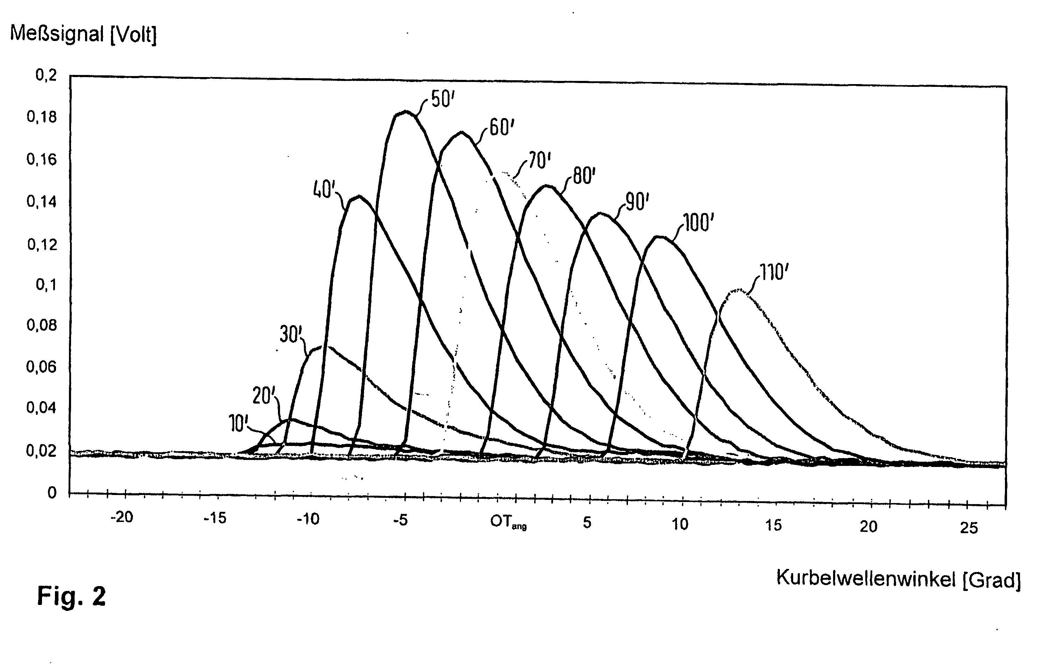

Während des Verbrennungsvorgangs werden die sich ändernden Leitfähigkeiten des im Zylinder befindlichen Verbrennungsgases gemessen, so daß die zuvor beschriebene Meßeinrichtung eine für den jeweiligen Einspritzzeitpunkt spezifische Meßsignalkurve aufnimmt, deren Verlauf einem der Verläufe der in dem in Fig. 1 gezeigten Diagramm dargestellten Meßsignalkurven 10 bis 110 entspricht. Durch mehrfaches Einspritzen der gleichen Menge Kraftstoffes in den Zylinder bei unterschiedlichen Einspritzzeitpunkten wird eine entsprechende Schar von Meßsignalkurven 10' bis 110' bezogen auf einen angenommen oberen Totpunkt OT_{ang} des Kolbens erzeugt, der von der den Kurbelwellenwinkel erfassenden Einrichtung vorgegeben worden ist. Diese auf den angenommenen oberen Totpunkt OT_{ang} bezogenen Meßsignalkurven 10' bis 110' sind in dem in Fig. 2 gezeigten Diagramm dargestellt.

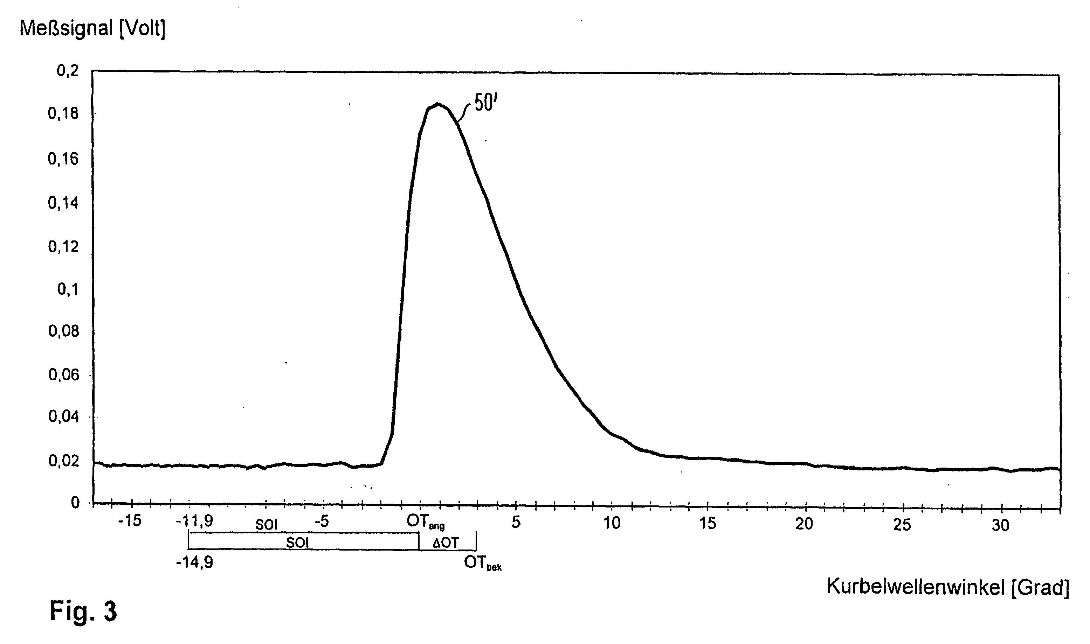

Weicht nun der von der Einrichtung erfaßte und als Ausgangspunkt für die Berechnung der Einspritzzeitpunkte angenommene obere Totpunkt OT_{ang} des Kolbens beispielsweise um -3 Kurbelwellenwinkelgrade von dem tatsächlichen oberen Totpunkt OTₜₐₜ des Kolbens ab, kommt es aufgrund der Abweichung ΔOT zwischen dem angenommenen oberen Totpunkt OT_{ang} und dem tatsächlichen oberen Totpunkt OTₜₐₜ zwangsweise zu einer Verschiebung der verschiedenen Einspritzzeitpunkte um -3 Kurbelwellenwinkelgrade, wie die als Beispiel gezeigte Meßsignalkurve 50' in dem in Fig. 3 dargestellten Diagramm zeigt.

Dies hat zur Folge, daß beispielsweise die Einspritzung SOI der im Diagramm der Fig. 3 gezeigten Kurve 50', bei der der Einspritzzeitpunkt bei -11,9 Kurbelwellenwinkelgraden bezogen auf den von der Einrichtung angenommenen oberen Totpunkt OT_{ang} angegeben ist, tatsächlich bei einem Kurbelwellenwinkel von -14,9° bezogen auf den tatsächlichen oberen Totpunkt OTₜₐₜ des Kolbens erfolgt.

Um nun die Einrichtung, mit der die Kurbelwellenstellung erfaßt wird, zu kalibrieren, wird aus der zuvor bestimmten Schar von Meßsignalkurven 10' bis 110', die auf den angenommenen oberen Totpunkt OT_{ang} bezogen sind, die Meßsignalkurve ausgewählt, die die größte Amplitude zeigt. Bei den im Diagramm der Fig. 2 gezeigten Meßsignalkurven 10' bis 110' wäre dies die Meßsignalkurve 50', die eine Amplitude von 0,18 Volt aufweist und bei der die Zündung des Gemisches im Zylinder bei einem Kurbelwellenwinkel von etwa -2° bezogen auf den angenommenen oberen Totpunkt OT_{ang} des Kolbens beginnt. Bezogen auf den tatsächlichen oberen Totpunkt OTₜₐₜ des Kolbens wurde die Einspritzung SOI jedoch bereits bei einem Kurbelwellenwinkel von -14,9° vorgenommen, während die Zündung bei einem Kurbelwellenwinkel von -5,1° erfolgt ist, wie das Diagramm in Fig. 3 zeigt.

Da, wie zuvor bereits erläutert, bei dem zuvor beschriebenen Motortyp aus Versuchsreihen bekannt ist, daß bei einem Einspritzzeitpunkt, der bei einem Kurbelwellenwinkel von -14,9° vor dem tatsächlichen oberen Totpunkt OTₜₐₜ liegt, der Verbrennungsvorgang erfolgt, bei dem die höchste Temperatur im Zylinder entsteht, bedeutet dies, daß der von der Einrichtung bestimmte, angenommene obere Totpunkt OT_{ang} des Kolbens um -3 Kurbelwellenwinkelgrade von dem tatsächlichen oberen Totpunkt OTₜₐₜ des Kolbens abweicht. Zum Kalibrieren der Einrichtung muß nun der von der Einrichtung jeweils erfaßte Kurbelwellenwinkel entsprechend der zuvor bestimmten Abweichung ΔOT von -3 Kurbelwellenwinkelgraden korrigiert werden.

### Bezugszeichenliste

- OTₜₐₜ: tatsächlicher oberer Totpunkt des Kolbens
- OT_{ang}: angenommener oberer Totpunkt des Kolbens
- 10 bis 110: Meßsignalkurven bezogen auf den tatsächlichen oberen Totpunkt des OTₜₐₜ des Kolbens
- 10' bis 110': Meßsignalkurven bezogen auf den angenommenen oberen Totpunkt OT_{ang} des Kolbens
- SOI: Beginn der Einspritzung
- ΔOT: Abweichung des angenommenen oberen Totpunktes OT_{ang} des Kolbens von dem tatsächlichen oberen Totpunkt OTₜₐₜ des Kolbens

## Patentansprüche

1. Kalibrierungsverfahren für eine Einrichtung zum Bestimmen der Kolbenstellung in einem Verbrennungsmotor, insbesondere in einem Dieselmotor, wobei bei dem Verfahren
bezogen auf eine von der Einrichtung bestimmte, vorgegebene Kolbenstellung (OT_{ang}) zu verschiedenen Einspritzzeitpunkten jeweils die gleiche Kraftstoffmenge in den Zylinder des Verbrennungsmotors eingespritzt und zur Verbrennung gebracht wird,
die für jeden Einspritzzeitpunkt im Zylinder des Verbrennungsmotors entstehende Temperatur erfaßt wird,
die für die verschiedenen Einspritzzeitpunkte erfaßten Temperaturen miteinander verglichen werden, um den auf die vorgegebene Kolbenstellung (OT_{ang}) bezogenen Einspritzzeitpunkt zu ermitteln, bei dem zumindest annähernd die höchste Temperaturentwicklung während des jeweiligen Verbrennungsvorgangs aufgetreten ist,
der auf die vorgegebene Kolbenstellung (OT_{ang}) bezogene Einspritzzeitpunkt, bei dem die höchste Temperaturentwicklung während des Verbrennungsvorgangs aufgetreten ist, mit einem abgespeicherten, für den Motortyp bekannten spezifischen Einspritzzeitpunkt verglichen wird, der bei einer für diesen spezifischen Einspritzzeitpunkt bekannten Kolbenstellung (OTₜₐₜ) zu einer für diese Kraftstoffmenge zumindest annähernd höchsten Temperaturentwicklung im Verbrennungsvorgang führt, und
die Einrichtung zum Bestimmen der Kolbenstellung kalibriert wird, indem die vorgegebene Kolbenstellung (OT_{ang}) entsprechend der Abweichung (ΔOT) zwischen den beiden Einspritzzeitpunkten an die tatsächliche Kolbenstellung (OTₜₐₜ) angeglichen wird.

2. Verfahren nach Anspruch 1, bei dem der Vergleich zwischen den beiden Einspritzzeitpunkten erfolgt, indem die Differenz (ΔOT) zwischen dem auf die vorgegebene Kolbenstellung (OT_{ang}) bezogenen zeitlichen Abstand des Einspritzzeitpunktes, bei dem die höchste Temperatur während des Verbrennungsvorgangs auftritt, und dem auf die bekannte Kolbenstellung (OTₜₐₜ) bezogenen zeitlichen Abstand des spezifischen Einspritzzeitpunktes gebildet wird, und bei dem die vorgegebene Kolbenstellung (OT_{ang}) entsprechend der Differenz (ΔOT) zwischen den beiden zeitlichen Abständen an die tatsächliche Kolbenstellung (OTₜₐₜ) angeglichen wird.

3. Verfahren nach Anspruch 1 oder 2, bei dem die vorgegebene Kolbenstellung ein angenommener oberer Totpunkt (OT_{ang}) des Kolbens ist, und bei dem die bekannte Kolbenstellung dem tatsächlichen oberen Totpunkt (OTₜₐₜ) des Kolbens entspricht, ausgehend von dem der spezifische Einspritzzeitpunkt bestimmt wurde.

4. Verfahren nach einem der Ansprüche 1 bis 3, bei dem die Kolbenstellungen in Kurbelwellenwinkeln definiert sind, wobei der Zündzeitpunkt des für den Motortyp spezifischen Einspritzzeitpunktes, bei dem ausgehend vom tatsächlichen oberen Totpunkt (OTₜₐₜ) des Kolbens die höchste Temperaturentwicklung während des Verbrennungsvorgangs auftritt, in einem Bereich von etwa 5 bis 6 Kurbelwellenwinkelgraden vor dem tatsächlichen oberen Totpunkt (OTₜₐₜ) des Kolbens liegt.

5. Verfahren nach einem der Ansprüche 1 bis 4, bei dem die Temperaturen während des Verbrennungsvorgangs im Verbrennungsmotor durch eine die Leitfähigkeit des im Zylinder befindlichen Verbrennungsgases erfassende Meßeinrichtung bestimmt wird, wobei für jeden Einspritzzeitpunkt eine Folge von Leitfähigkeitswerten bestimmt wird.

6. Verfahren nach Anspruch 5, bei dem die Leitfähigkeit des Verbrennungsgases auf Grundlage des im Verbrennungsgas enthaltenen Anteils an positiv bzw. negativ geladener Teilchen bestimmt wird.

7. Verfahren nach Anspruch 5 oder 6, bei dem aus den verschiedenen Folgen auf den Kurbelwellenwinkel bezogene Leitfähigkeitskurven (10' - 110') aufgetragen werden, und bei dem die Leitfähigkeitskurve (50') mit der größten Amplitude und/oder dem durch Integration bestimmten, größten Flächeninhalt ermittelt wird, die der Leitfähigkeitskurve(50') entspricht, bei der die höchste Temperatur im Zylinder freigesetzt wird.

8. Verfahren nach einem der vorhergehenden Ansprüche, wobei die zu kalibrierende Einrichtung den Kurbelwellenwinkel des Verbrennungsmotors erfaßt.

9. Verfahren nach einem der vorhergehenden Ansprüche, bei dem das Angleichen der vorgegebenen Kolbenstellung an die tatsächliche Kolbenstellung im Leerlaufbetrieb des Verbrennungsmotors erfolgt.

10. Verfahren nach einem der vorhergehenden Ansprüche, bei dem das Kalibrieren der Einrichtung zum Bestimmen der Kolbenstellung kurz nach dem Start des Verbrennungsmotors erfolgt, vorzugsweise sobald der Verbrennungsmotor seine Betriebstemperatur erreicht hat.

## Claims

1. Calibration method for a device for determining the piston position in an internal combustion engine, in particular in a diesel engine, wherein in said method
in relation to a predetermined piston position (OT_{ang}) which is determined by the device the same amount of fuel is injected into the cylinder of the internal combustion engine at different injection time points and is brought to combustion,
the temperature which arises in the cylinder of the internal combustion engine is measured for each injection time point,
the temperatures which are measured for the different injection time points are compared with one another in order to determine the injection time point related to the predetermined piston position (OT_{ang}), at which at least approximately the highest temperature development has arisen during the respective combustion process, the injection time point at which the highest temperature development during the combustion process has arisen in relation to the predetermined piston position (OT_{ang}) is compared with a specific, stored injection time point which is known for the engine type and which, at a piston position (OTₜₐₜ) which is known for this specific injection time point, leads to an at least approximately highest temperature development in the combustion process for this amount of fuel, and
the device for determining the piston position is calibrated in that the predetermined piston position (OT_{ang}) is matched to the actual piston position (OTₜₐₜ) in accordance with the deviation (ΔOT) between the two injection time points.

2. Method in accordance with claim 1, in which the comparison between the two injection time points takes place in that the difference (ΔOT) between the time interval between the injection time point at which the highest temperature arises during the combustion process in relation to the predetermined piston position (OT_{ang}) and the time interval of the specific injection time point in relation to the known piston position (OTₜₐₜ) is formed, and in which the predetermined piston position (OT_{ang}) is matched to the actual piston position (OTₜₐₜ) in accordance with the difference (ΔOT) between the two time intervals.

3. Method in accordance with claim 1 or 2, in which the predetermined piston position is an assumed upper dead center (OT_{ang}) of the piston, and in which the known piston position corresponds to the actual upper dead center (OTₜₐₜ) of the piston, starting from which the specific injection time point was determined.

4. Method in accordance with any one of the claims 1 to 3, in which the piston positions are defined in terms of crankshaft angles, with the ignition time point for the injection time point, which is specific for the engine type, at which, starting at the actual upper dead center (OTₜₐₜ) of the piston, the highest temperature development arises during the combustion process, lies in a range of approximately 5 to 6 degrees of crankshaft angle ahead of the actual upper dead center (OTₜₐₜ) of the piston.

5. Method in accordance with any one of the claims 1 to 4, in which the temperatures during the combustion process in the internal combustion engine are determined by a measurement device which measures the conductivity of the combustion gas which is located in the cylinder, with a sequence of conductivity values being determined for each injection time point.

6. Method in accordance with claim 5, in which the conductivity of the combustion gas is determined on the basis of the proportion of positively and/or negatively charged particles which is contained in the combustion gas.

7. Method in accordance with claim 5 or claim 6, in which conductivity curves (10' - 110') in relation to the crankshaft angle are plotted from the various sequences, and in which the conductivity curve (50') with the largest amplitude and/or the largest area content as determined through integration, which corresponds to the conductivity curve (50') at which the highest temperature is set free in the cylinder, is determined.

8. Method in accordance with any one of the preceding claims, with the device to be calibrated measuring the crankshaft angle of the internal combustion engine.

9. Method in accordance with any one of the preceding claims, in which the matching of the predetermined piston position to the actual piston position takes place during the idling operation of the internal combustion engine.

10. Method in accordance with any one of the preceding claims, in which the calibration of the device for determining the piston position takes place shortly after the starting of the internal combustion engine, preferably as soon as the internal combustion engine has reached its operating temperature.

## Revendications

1. Procédé d'étalonnage d'un dispositif pour la détermination de la position du piston dans un moteur à combustion interne, en particulier dans un moteur diesel, sachant que dans le procédé, concernant une position de piston (OT_{ang}) prédéfinie déterminée par le dispositif aux différents moments d'injection la même quantité de carburant est injectée respectivement dans le cylindre du moteur à combustion interne et amenée en combustion, la température s'établissant pour chaque moment d'injection dans le cylindre du moteur à combustion interne est saisie, les températures saisies pour les différents moments d'injection sont comparées les unes aux autres, afin de détecter le moment d'injection relatif à la position prédéfinie du piston (OT_{ang}), moment auquel le développement thermique du moins approximativement le plus élevé se produit pendant chaque processus de combustion, le moment d'injection se rapportant à la position du piston prédéfinie (OT_{ang}), moment auquel le développement thermique le plus élevé est intervenu pendant le processus de combustion, est comparé avec un moment d'injection spécifique connu mémorisé pour le type de moteur, qui dans une position de piston connue (OTₜₐₜ) pour ce moment d'injection spécifique conduit à un développement thermique du moins approximativement le plus élevé pour ces quantités de carburant dans un processus de combustion et le dispositif est étalonné pour la détermination de la position du piston par le fait que la position du piston prédéfinie (OT_{ang}) est équilibrée sur la position effective du piston (OTₜₐₜ) de manière correspondant à l'écart (ΔOT) entre les deux moments d'injection.

2. Procédé selon la revendication 1, dans lequel la comparaison entre les deux moments d'injection est réalisée par le fait que la différence (ΔOT) entre l'écart temporaire du moment d'injection relatif à la position du piston prédéfinie (OT_{ang}), moment auquel la température la plus élevée intervient pendant le processus de combustion et l'écart temporaire du moment d'injection spécifique relatif à la position connue du piston (OTₜₐₜ) est réalisé, et dans lequel la position prédéfinie du piston (OT_{ang}), est équilibrée sur la position effective du piston (OTₜₐₜ) de manière correspondant à la différence (ΔOT) entre les deux écarts temporaires.

3. Procédé selon la revendication 1 ou 2, dans lequel la position prédéfinie du piston est un point mort supérieur supposé du (OT_{ang}) piston et dans lequel la position connue du piston correspond au point mort supérieur effectif (OTₜₐₜ) du piston, à partir duquel le moment d'injection spécifique a été déterminé.

4. Procédé selon l'un des revendications 1 à 3, dans lequel les positions des pistons sont définies dans des angles de vilebrequin, sachant que le point d'allumage du moment d'injection spécifique au type de moteur, dans lequel le développement thermique le plus élevé intervient pendant le processus de combustion à partir du point mort supérieur effectif (OTₜₐₜ) du piston, dans une zone d'environ 5 à 6 degrés d'angles de vilebrequin avant le point mort supérieur effectif.

5. Procédé selon l'une des revendications 1 à 4, dans lequel les températures sont déterminées pendant le processus de combustion dans le moteur à combustion interne par un dispositif de mesure détectant la conductivité du gaz de combustion présent dans le cylindre, sachant qu'une suite de valeurs de conductivité est déterminée pour chaque moment d'injection.

6. Procédé selon la revendication 5, dans lequel la conductivité du gaz de combustion est déterminée sur la base de la proportion contenue dans le gaz de combustion en particules chargées positivement ou selon le cas négativement.

7. Procédé selon la revendication 5 ou 6, dans lequel des courbes de conductivité (10' - 110') relatives à l'angle de vilebrequin sont appliquées à partir des différentes suites et dans lequel la courbe de conductivité (50') avec la plus grande amplitude et/ou la plus grande surface déterminée par intégration est détectée, qui correspond à la courbe de conductivité (50') dans laquelle la température la plus élevée est dégagée dans le cylindre.

8. Procédé selon l'une des revendications précédentes, dans lequel le dispositif à étalonner détermine l'angle de vilebrequin du moteur à combustion interne.

9. Procédé selon l'une des revendications précédentes, dans lequel l'équilibrage de la position prédéfinie du piston intervient à la position effective du piston en fonctionnement à vide du moteur à combustion interne.

10. Procédé selon l'une des revendications précédentes, dans lequel l'étalonnage du dispositif de détermination de la position du piston se produit immédiatement après le démarrage du moteur à combustion interne, de préférence dès que le moteur à combustion interne a atteint sa température de fonctionnement.
